# EUROPEAN PATENT APPLICATION

(11) **EP 1 347 293 A1**
(43) Date of publication of application: **24.09.2003**
(21) Application number: 02251908.6
(22) Date of filing: 18.03.2002
(51) Int. Cl.: G01N 29/02

(54) **Acoustical cell for material analysis**

(71) Applicant: Ultrasonic Scientific Limited, Dublin 8 (IE)
(72) Inventor: The designation of the inventor has not yet been filed
(74) Representative: Haley, Stephen

(57) **Abstract**

An acoustical cell for analysis of materials by measuring parameters of acoustical resonance. The cell comprises a main frame and an electroacoustical transducer assembly. The main frame includes at least one interstice and has substantially parallel exterior surfaces that engage, in use, with walls to define a sample cavity into which a specimen for analysis is placed in use. The electroacoustical transducer assembly is acoustically coupled to at least one of the walls and comprises at least one electroacoustical transducer. Analysing means for analysing the output of the electroacoustical transducer assembly is also provided.

## Description

The present invention relates generally to material analysis, and more particularly to a device in which acoustic wave fields may be generated in material specimens and the frequency dependencies of the amplitude, phase or impedance of these fields may be analysed as well as methods of using such a device in ultrasonic spectroscopy.

In acoustical cell technology it is known to make acoustic measurements by placing a specimen in a chamber and generating acoustical waves within the chamber. These acoustical waves are generally created by mechanical vibrations which set up wave patterns in the sample. Measurement of these wave patterns leads to a characterisation of the interaction between the acoustical wave and the sample and thus a high resolution evaluation can be made of the properties of the material. This technique has the advantage that measurements can take place on very small samples. The precision geometry of the chamber is an important factor in both the precision of the measurements obtained and also in the cost of manufacture of the cell. The cell geometry must also be chosen to minimise the creation of air bubbles within the cell, for example. However, a consideration such as this may be in conflict with the requirement for mathematically simple shapes, which simplify analysis, for the walls of the chamber. Other considerations that need to be taken into account in the choice of geometry for the cell are factors such as the chemical resistance of the walls, effective cleaning procedures and effective stirring of a specimen. Furthermore, environmental factors such as heat expansion play a major role in altering the geometry and this must be considered seriously in the choice of materials for cell construction. It can therefore be difficult to provide an acoustical cell that meets these criteria, yet which is also cost effective and which does not require complex support equipment to operate.

Ultrasonic spectroscopy is a non-destructive analytical technique based on the measurements of parameters of low energy ultrasonic waves. It is known through its successful applications in medicine and number of fields of material analysis. However limited resolution of the measurements and large sample volume required have prevented wide spread use of this technique in research and analytical laboratories in the past. In particular, there is a potential need for devices for use in the analysis of enzymatic reactions, conformational transistions in polymers, biopolymer-ligand binding and antigen-antibody interactions, aggregation in suspensions and emulsions, formation of particle and polymer gels, micellisation, adsorption on particle surfaces, composition analysis and others, but current ultrasonic analysis devices are limited in their ability to do this, as will be discussed below.

The present invention seeks to overcome some of the above mentioned problems and provide a cell which is cost effective and simple to operate, as well as providing methods for using such a cell.

According to the present invention there is provided an acoustical cell for analysis of materials by measuring acoustical parameters including an indication of acoustic velocity, the cell comprising:
a main frame including at least one interstice and having exterior surfaces that engage, in use, with walls to define a sample cavity into which a specimen for analysis is placed in use,
an electroacoustical transducer assembly acoustically coupled to at least one of the walls and comprising at least one electroacoustical transducer, and
analysing means for analysing the output of the transducer to provide an indication of changes in the acoustic velocity characteristics of a sample in the sample cavity in use.

Preferably the cell further comprises a supporting frame substantially encasing the main frame and the walls. The supporting frame and the walls may be fabricated as a single block and may be formed from the same material. Preferably, the main frame, walls and supporting frame, if provided, are formed of an optically transmissive material to allow optical parameters to be measured.

The space between the supporting frame and the walls may be filled with a sample, in use.

The walls may be substantially planar, or curved to minimise diffraction losses.

Preferably, the transducer is biassed to remain in direct or indirect contact with the wall or walls.

The cell may further comprise a stopper to avoid sample evaporation in use.

Examples of the present invention will now be described with reference to the drawings, in which:
Figure 1 shows a cross sectional view of an example of the present invention;
Figure 2 shows a cell according to the present invention comprising two interstices;
Figure 3 shows a front view of a main frame employed in the example of figure 2;
Figure 4 is a graph showing output of the device of figures 1 to 3 during a titration reaction.
Figure 5 is a graph showing change in ultrasonic velocity with respect to time for an example reaction; and
Figure 6 is a graph showing changes in relative ultrasonic velocity and ultrasonic attenuation during the melting of a gel in water.

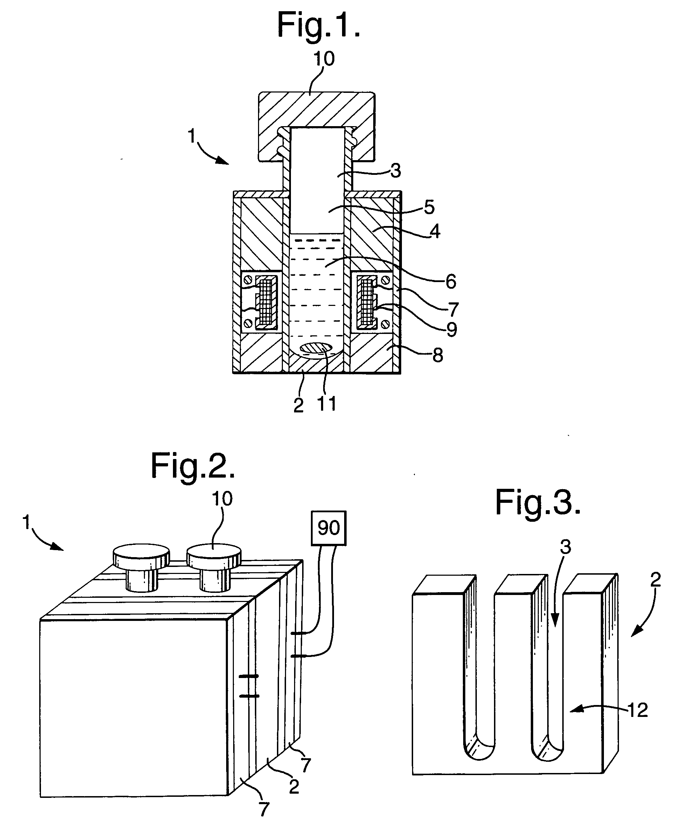

Figure 1 shows a cell 1 according to the present invention. The cell 1 comprises a main frame 2 which consists of at least one interstice 3. The main frame 2 engages, in use, with walls 4 to define a sample cavity 5 in which a sample 6 may be placed in use. The sample cavity 5 is surrounded by supporting frame 7. A gap 8 between the supporting frame 7 and the sample cavity 5 accommodates at least one transducer 9. A stopper 10 is provided. A stirring magnet 11 is optionally provided within the main frame 1.

The at least one transducer 9 is attached to at least one of the walls 4 to generate acoustical resonance. The transducer may be sealed to prevent ingress of condensation, and may be surrounded by inert gas to improve control of its parameters. The detection of the resonance may take place through measuring the electrical characteristics of the transducer 9 or by measuring the electrical characteristics of a second transducer 9 optionally attached to the same or another wall 4 of the sample cavity 5. In both cases the analysis occurs in analysing and control means 90 in electrical connection with the device. The analysing and control means 90 will be discussed in more detail below. Although these acoustical resonances are generally created by mechanical vibrations which set up standing wave patterns if the attenuation coefficient of the material is very high then an acoustical resonance cannot be formed and in this case the continuous wave itself may be employed to evaluate the acoustical parameters of the specimen. The walls 4 may be substantially planar parallel walls, as shown, or alternatively they may be, for example, spherical or cylindrical in shape in order to provide a cavity shape that minimises diffraction at low frequencies. This feature of the walls 4 may also have the added benefit of aiding the filling of the sample cavity 5 with the sample 6 prior to analysis.

The supporting frame 7 is provided to overcome the problems associated with the trade off between thin walls which, are desirable for high resolution analysis, and the problem of instability and possible warping of thin walls. In order to overcome this problem it is envisaged that the central frame, supporting frame and the walls may be made from a single block. Furthermore, this single block may be formed from one material such as quartz or glass. This approach has the advantage that the module has fewer internal parts that need cleaning and reassembling. High precision optical engineering has, for some time now, provided high precision objects in optically transmissive materials and the present invention draws on this expertise in order to provide a cell 1 for high precision acoustical measurements.

In this example, the electrical connections serving the transducers are grouped together so that only one connection to the cell 1 from the analysing and control means 90 is needed regardless of the number of transducers. This, combined with a single block configuration for the cell 1 itself, results in a cell 1 which operates as a plug-in module providing ease of connection and removal of the module for cleaning or refilling purposes.

Furthermore, the gap 8 between the supporting frame 7 and the sample cavity 5 may be used to control the conditions within the sample cavity 5 by filling the gap 8 with, for example, an inert gas if the sample 6 is volatile. In addition there may be an outer shell (not shown) attached to the supporting frame 5 which may form a water bath to control the temperature of the sample 6. Other forms of temperature control are possible.

The electroacoustical transducer 9 can be attached to one of the walls 4 permanently or via a highly viscous and/or elastic layer, thus avoiding deformation of the walls 4 and the transducer 9 with increased temperature due to the different heat expansion coefficients of the transducer 9, the walls 4 and the material connecting them. In addition an elastic element such as a spring or O-ring can be used to bias a non-permanently attached electroacoustical transducer 9 against the walls 4.

Given the precise nature of the measurements being made in the cell 1, the issue of the heat expansion coefficients of the various components is often important and therefore the supporting frame 7 and the walls 4 may be formed as a single block to reduce this problem and may be formed from the same materials which may be the same as that forming the transducer.

The magnet 11 housed in the base of the main frame 2 allows the sample 6 to be stirred when used in conjunction with a magnetically actuated stirring mechanism (not shown). The stopper 10 is provided in order to overcome the problem of sample evaporation from the cell 1.

The example may further be supplied with means (not shown) by which a fluid may be injected into the sample cavity 5 thereby to mix with the sample 6. Thus, such an arrangement can be used, for example, for titration.

Figure 2 shows the exterior of cell 1 with the inlets of the two interstices 3 closed by stoppers 10. The advantage of having two interstices 3 is that parallel measurements may be made of two separate substances under the same conditions allowing precision measurement of differential effects.

Figure 3 shows the main frame 2 with two interstices 3 that is used in the example of figures 1 and 2. The front 12 and back (not shown) walls are substantially parallel so that they can engage easily with the walls 4 to form the sample cavity 5. More interstices could be provided dependent upon the application.

Before describing examples of reactions that can be measured by employing the device described above, it is worthwhile discussing some of the underlying principles related to ultrasonic measurement of substances.

Non-destructive analysis of intrinsic properties of materials includes measurements of signals travelled through the analysed sample. Any signal is a combination of waves and only one wave dominated in the field of material analysis, i.e. electromagnetic wave. This wave probes electromagnetic properties of materials and is employed in optical spectroscopy and its variations, NMR, microwave and others. Ultrasound provides an alternative wave, which probes intermolecular forces. In this wave oscillating pressure (stress) causes oscillation of compression (mechanical deformation) and therefore by its nature it is a rheological wave. This wave is the same as an acoustical one, only at higher frequency (usually above 100 KHz).

The measured parameters in high-resolution ultrasonic spectroscopy are ultrasonic attenuation and velocity. In homogenous samples the major contributor to the ultrasonic attenuation is fast chemical relaxation. Changes of pressure and temperature in ultrasonic waves cause a periodical shift in the equilibrium position of chemical reactions. Relaxation to the equilibrium results in energy losses in ultrasonic waves. This allows analysis of kinetics of fast chemical reactions, typically with the range of relaxation times 10⁻⁵ - 10⁻⁸s. In non-homogenous samples (emulsions, dispersions, etc.) scattering of ultrasonic waves is another contributor to ultrasonic attenuation. This contribution allows well-known ultrasonic particle sizing.

The second parameter, ultrasonic velocity, is determined by the density and the elasticity of the medium. Compression in the ultrasonic wave changes the distances between the molecules of the sample, which respond by intermolecular repulsions. Thus, ultrasonic velocity can be expressed in terms of compressibility. This parameter is very sensitive to the molecular organisation and intermolecular interactions in the analysed medium and is employed in analysis of a broad range of molecular processes. However wide application of ultrasonic velocity requires extremely high resolution (better than 10⁻⁴%) of the measurements, which is difficult to achieve in known devices.

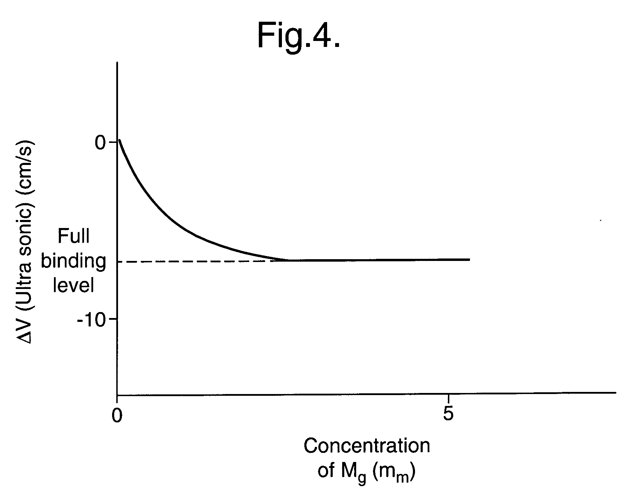

Figure 4 illustrates the application of the device of Figures 1 to 3 for ultrasonic analysis of ligand-polymer binding, i.e. binding of positively charged magnesium ions with negatively charged polyriboadenilic acid, poly(A), (analogue of well known RNA). A concentrated solution of MgCl₂ was added stepwise into the measuring ultrasonic cell containing 1 ml of aqueous solution of poly(A) and into the reference ultrasonic cell containing 1 ml of buffer. The device measured the difference in ultrasonic parameters of the samples in the measuring and the reference cells, thus subtracting the contribution of MgCl₂. Therefore the plotted changes of ultrasonic velocity and attenuation represent the interaction of magnesium ions with poly(A) only.

Binding of magnesium with poly(A) results in the initial decrease of ultrasonic velocity caused by the release of hydration water from the coordination shell of Mg²⁺ ions and atomic groups of the polymer. The compressibility of water in the hydration shells of the ligand and the polymer is less then the compressibility of the bulk water, therefore transferring of hydration water into the bulk water increases the total compressibility of the solution, thus reducing the ultrasonic velocity. When all available sites on the polymer are occupied by the ligand the curve levels off. The total drop in ultrasonic velocity is linked with the number of water molecules excluded from the coordination shell of Mg²⁺ allowing the make structural characterisation of the complex. Binding constants and stoicheometries can be calculated from the shape of the curve.

At high concentrations of magnesium electrostatically neutralised polymer molecules begin to form aggregates. The scattering of ultrasonic waves by the aggregates leads to the increase in attenuation. Additional dehydration and intrinsic compressibility of the aggregates results in the decrease of ultrasonic velocity at this stage. None of these measurements require any optical activity of the ligand and the polymer and optical transparency of the medium.

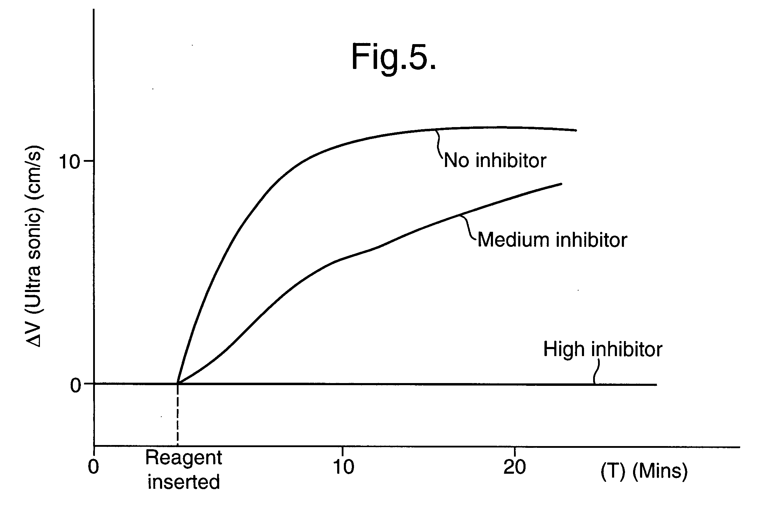

Figure 5 illustrates the ultrasonic analysis of activity of a reaction from the start, through a point when a reagent is added to a point when a product Is generated. The reaction may be enzymatic. In this example there is hydrolysis of an enzyme and the graph shows the output in the presence of no inhibitor, a weak inhibitor and a strong inhibitor. The ultrasonic curve can be recalculated into the time dependence of the amount of substrate hydrolysed, i.e. kinetic profile of the reaction, to calculate the activity.

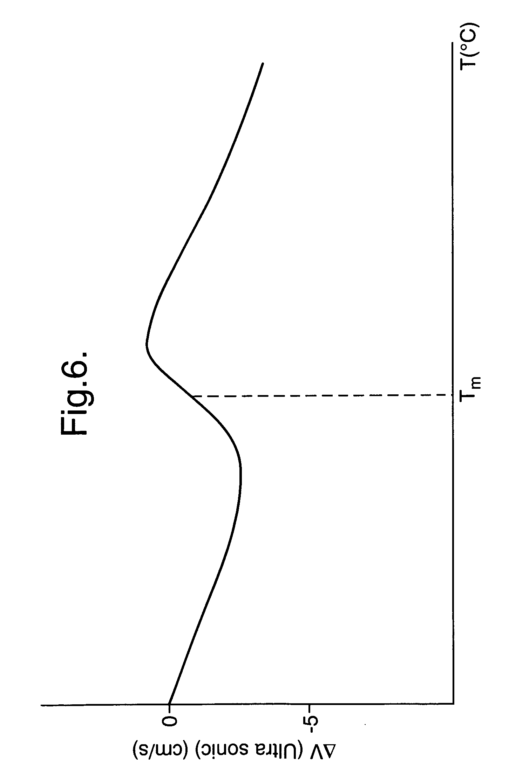

Figure 6 illustrates the application of a temperature ramp regime to the device of Figures 1 to 3, for analysis of heat transition in an aqueous solution of a short fragment of DNA. As can be seen from figure 6, the output of the device can be used to determine the melting temperature at which two strands of DNA split apart by determining the changes in ultrasonic velocity of the solution. The measurements may be performed differentially by providing also a reference cell in the device that contains simply a buffer solution. In this way, external influences on the process can be compensated for. The major contributor to the increase in attenuation is the scattering of ultrasonic waves on the aggregates. In this system high-resolution ultrasonic spectroscopy allows detection of the temperature and the width of the phase transition, the melting point as well as the analysis of the transformations in the structure (ultrasonic velocity) and characterization the structure of aggregates (ultrasonic attenuation).

In all of the above examples the analysing means 90 of the device, which may be an inappropriately configured PC which digitally samples the output of the transducers, is configured to receive signals from the transducers and analyses them to obtain data. The data that is obtained is an indication of the ultrasonic velocity, even though in some cases it may be expressed in terms of the compressibility of the substance being measured in the sample cavity in the device.

## Claims

1. An acoustical cell for analysis of materials by measuring acoustical parameters including an indication of acoustic velocity, the cell comprising:
a main frame including at least one interstice and having exterior surfaces that engage, in use, with walls to define a sample cavity into which a specimen for analysis is placed in use,
an electroacoustical transducer assembly acoustically coupled to at least one of the walls and comprising at least one electroacoustical transducer, and
analysing means for analysing the output of the transducer to provide an indication of changes in the acoustic velocity characteristics of a sample in the sample cavity in use.

2. An acoustical cell according to claim 1, wherein the exterior surfaces of the main frame are substantially parallel.

3. An acoustical cell according to claim 1 or 2, further comprising a supporting frame substantially encasing the main frame and the walls.

4. An acoustical cell according to claim 1, 2 or 3, wherein the supporting frame and the walls are fabricated as a block.

5. An acoustical cell according to any preceding claim wherein the walls are substantially planar.

6. An acoustical cell according to any of claims 1 to 4, wherein the parts of the walls facing the resonance cavity are spherical, cylindrical or other curved profile to minimise diffraction losses.

7. An acoustical cell according to any of claims 2 to 6, wherein the cell has conduits for receiving temperature controlling fluid, in use.

8. An acoustical cell according to any of the preceding claims further comprising a stopper to avoid sample evaporation in use.

9. An acoustical cell according to any of the preceding claims wherein the at least one interstice further comprises a channel for the injection of fluids, in use.

10. An acoustical cell according to any of the preceding claims and formed chemically resistant materials.

11. A acoustical cell according to any of the preceding claims, wherein the transducer is movably coupled to the wall.

12. A method of analysing a sample by employing ultrasonic spectroscopy, the method comprising the steps of:
inserting a sample into a main frame including at least one interstice which has exterior surfaces that engage, in use, with walls to define a sample cavity and which further comprises an electrical acoustic transducer;
passing ultrasonic signals through the sample;
receiving electrical signals from the electroacoustical transducer;
analysing the received signals; and
providing an output indicative of the ultrasonic velocity of the signals passing through the sample in use.

13. A method according to claim 12, wherein the output is expressed in terms of the compressibility of the sample.

14. A method according to claim 12 or 13, wherein the sample comprises the components necessary to effect an enzymatic reaction.

15. A method according to claim 12 or 13, wherein the sample comprises the component necessary to perform a ligand-polymer binding process.

16. A method according to any of claims 12 to 15, wherein the sample is heated during the performance of the method.
